# EUROPEAN PATENT APPLICATION

(11) **EP 3 349 117 A1**
(43) Date of publication of application: **18.07.2018**
(21) Application number: 16843899.2
(22) Date of filing: 23.08.2016
(51) Int. Cl.: G06F 11/00

(54) **CONTROL METHOD AND COMMUNICATION DEVICE EMPLOYING SAME**

(30) Priority: 10.09.2015 JP 2015178745
(71) Applicant: Panasonic Intellectual Property Management Co., Ltd., Osaka-shi, Osaka 540-6207 (JP)
(72) Inventor: NAGATA, Masahiro, Osaka-shi, Osaka 540-6207 (JP); HARADA, Kenji, Osaka-shi, Osaka 540-6207 (JP); HOSHIBA, Keitaro, Osaka-shi, Osaka 540-6207 (JP)
(74) Representative: Appelt, Christian W.
(86) International application number: PCT/JP2016/003836
(87) International publication number: WO 2017/043026

(57) **Abstract**

A program memory 30 has a boot area in which a boot program is written, and a first area and a second area in which writing of an application program is enabled. A data memory 32 stores an area selection flag selecting one of the first area and the second area in the program memory 30. A communication interface 34 receives an application program that should be written in the program memory 30. A controller 36 controls the program memory 30, the data memory 32, and the communication interface 34.

## Description

### [TECHNICAL FIELD]

The present invention relates to control technologies and, more particularly, to a control method for updating an application program and a communication device using the method.

### [BACKGROUND ART]

A mobile communication terminal performs communication by starting a program compatible with the communication scheme. The program is updated over the air. In other words, the mobile communication terminal downloads update data and rewrites the program of an old version with the program of a new version using the update data (see, for example, patent document 1).
[patent document 1] JP2010-44574
[patent document 2] JP2014-531099
[patent document 3] JP2013-205929
[patent document 4] JP2014-116030
[patent document 5] JP2004-348434

### [PROBLEM TO BE SOLVED BY THE INVENTION]

The scale of programs for mobile phone communication is generally so large that only the update data that represents a difference between an old version and a new version is downloaded. For this reason, the mobile communication terminal can continue communication by using the program of the old version even if it fails to acquire the update data. Meanwhile, short-range wireless communication devices operated with a small power also start programs in order to perform communication, but the scale of the programs is often smaller than that of programs for mobile phone communication. For ease of processing, a wireless communication device is configured to download the program of a new version and substitutes it for the program of an old version. In this case, the program of the old version is deleted so that the wireless communication device will no longer be able to perform communication once it fails to acquire the program of the new version.

In this background, a purpose of the present invention is to provide a technology for updating programs safely.

### [MEANS TO SOLVE THE PROBLEM]

A communication device according to an embodiment of the present invention comprises: a program memory having a boot area in which a boot program is written, and a first area and a second area in which writing of an application program is enabled; a data memory in which an area selection flag selecting one of the first area and the second area in the program memory is stored; a receiver that receives an application program that should be written in the program memory; and a controller that executes the boot program written in the boot area in the program memory and starts the application program written in the first area or the second area in the program memory in accordance with selection in the area selection flag stored in the data memory. The controller writes the application program received in the receiver in the first area or the second area in the program memory in accordance with non-selection in the area selection flag stored in the data memory, changes the area selection flag stored in the data memory, and re-starts the communication device.

Another embodiment of the present invention also relates to a communication device. A communication device comprises: a program memory having a boot area in which a boot program is written and an application area in which writing of an application program is enabled; an additional memory in which writing of an application program for updating the application program written in the application area in the program memory is enabled; a data memory in which an update flag indicating presence or absence of an updatable application program in the additional memory is stored; a receiver that receives an application program that should be written in the additional memory; and a controller that executes the boot program written in the boot area in the program memory and starts the application program written in the application area in the program memory when the update flag stored in the data memory indicates the absence. The controller writes the application program received in the receiver in the additional memory, changes the update flag stored in the data memory to indicate the presence, and re-starts the communication device, and the controller executes the boot program written in the boot area in the program memory and, when the update flag stored in the data memory indicates the presence, copies the application program written in the additional memory to the application area in the program memory, changes the update flag stored in the data memory to indicate the absence, and re-starts the communication device.

Still another embodiment of the present invention relates to a control method. The method is adapted to a communication device comprising: a program memory having a boot area in which a boot program is written, and a first area and a second area in which writing of an application program is enabled; a data memory in which an area selection flag selecting one of the first area and the second area in the program memory is stored; and a receiver that receives an application program that should be written in the program memory, and the method comprises: executing the boot program written in the boot area in the program memory and starting the application program written in the first area or the second area in the program memory in accordance with selection in the area selection flag stored in the data memory; and writing the application program received in the receiver in the first area or the second area in the program memory in accordance with non-selection in the area selection flag stored in the data memory, changing the area selection flag stored in the data memory, and re-starting the communication device.

Yet another embodiment of the present invention also relates to a control method. The method is adapted to a communication device comprising: a program memory having a boot area in which a boot program is written and an application area in which writing of an application program is enabled; an additional memory in which writing of an application program for updating the application program written in the application area in the program memory is enabled; a data memory in which an update flag indicating presence or absence of an updatable application program in the additional memory is stored; and a receiver that receives an application program that should be written in the additional memory, and the method comprises: executing the boot program written in the boot area in the program memory and starting the application program written in the application area in the program memory when the update flag stored in the data memory indicates the absence; writing the application program received in the receiver in the additional memory, changing the update flag stored in the data memory to indicate the presence, and re-starting the communication device; and executing the boot program written in the boot area in the program memory and, when the update flag stored in the data memory indicates the presence, copying the application program written in the additional memory to the application area in the program memory, changing the update flag stored in the data memory to indicate the absence, and re-starting the communication device.

Optional combinations of the aforementioned constituting elements, and implementations of the invention in the form of methods, apparatuses, systems, recording mediums, and computer programs may also be practiced as additional modes of the present invention.

### [ADVANTAGE OF THE INVENTION]

According to the invention, programs can be updated safely.

### [BRIEF DESCRIPTION OF THE DRAWINGS]

Fig. 1 shows a configuration of a communication system according to embodiment 1 of the present invention;
Fig. 2 shows a configuration of the communication device of Fig. 1;
Fig. 3 shows the data structure of the program memory of Fig. 2;
Fig. 4 shows the data structure of the data memory of Fig. 2;
Figs. 5A and 5B are flowcharts showing sequences of steps performed by the communication device of Fig. 2;
Fig. 6 shows the configuration of the communication device according to embodiment 2 of the present invention;
Figs. 7A-7B show the data structures of the program memory and the additional memory of Fig. 6;
Fig. 8 shows the data structure of the data memory of Fig. 6;
Figs. 9A and 9B are flowcharts showing sequence of steps performed by the communication device of Fig. 6;
Figs. 10A-10B show the data structures of the program memory and the additional memory according to embodiment 3 of the present invention;
Fig. 11 shows the data structure of the data memory according to embodiment 3 of the present invention; and
Figs. 12A and 12B are flowcharts showing sequences of steps performed by the communication device according to embodiment 3 of the present invention.

### [MODE FOR CARRYING OUT THE INVENTION]

### (Embodiment 1)

A brief summary will be given before describing the invention in specific details. Embodiment 1 of the present invention relates to a communication device adapted for short-range/small-power equipment. Short-range/small-power equipment consume small power; plus, they use wireless technology that enables long battery operation and requires no licenses. Communication devices like these are used for home security applications such as fire-alarm systems, home automation applications, etc. Unlike mobile phone terminals, communication devices are not provided with an operating system (OS) or a file system. In a communication device for short-range/small-power equipment, an application program is generally written at the time of manufacturing in a non-volatile memory of a micro control unit (MCU). As such, these communication devices are not adapted to changes to the application program after shipping. However, it is required to update an application program after shipping in order to change the communication procedure or to add a new communication device to the system.

In this background, the following process is performed in this embodiment in order to update an application program simply and safely in communication devices not provided with an OS or a file system. Two areas in which an application program can be written are provided in a non-volatile memory of the MCU of the communication device. The two areas are referred to, for example, as a first area and a second area. Further, the communication device stores an area selection flag in the electrically erasable programmable read-only memory (EEPROM) of the MCU. One of the first area and the second area is designated by the area selection flag.

The central processing unit (CPU) of the MCU in the communication device refers to the area selection flag when the communication device is started and starts the application program written in the area designated by the area selection flag. Meanwhile, when an application program for an update is received, the CPU writes the application program for an update in the area not designated by the area selection flag. When the application program for an update has been written, the CPU changes the area selection flag before re-starting the communication device.

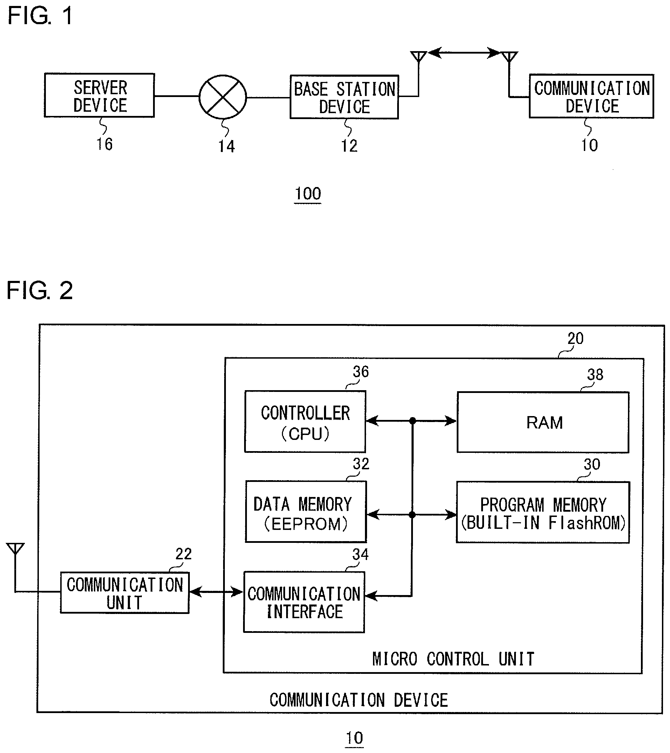

Fig. 1 shows a configuration of a communication system 100 according to embodiment 1 of the present invention. The communication system 100 includes a communication device 10, a base station device 12, a network 14, and a server device 16. The communication device 10 and the base station device 12 communicate bi-directionally using a wireless communication scheme for short-range/small-power equipment. The communication device 10 and the base station device 12 are installed at, for example, a house of a service recipient. The base station device 12 is connected to the server device 16 via the network 14. The network 14 is, for example, the Internet. The network 14 may be a wired circuit or a wireless circuit such as a mobile phone network. The server device 16 is installed at the end of a service provider.

With this configuration, the communication device 10 communicates with the server device 16 via the base station device 12 and the network 14. When the communication device 10 is a fire-alarm system, for example, the communication device 10 transmits an alert generated in response to the detection of a fire to the server device 16. The server device 16 also transmits the application program for an update in the communication device 10 to the communication device 10. A description will be given of a process performed in the communication device 10 when the application program for an update is received.

Fig. 2 shows a configuration of the communication device 10. The communication device 10 includes a micro control unit 20 and a communication unit 22. Further, the micro control unit 20 includes a program memory 30, a data memory 32, a communication interface 34, a controller 36, and a RAM 38.

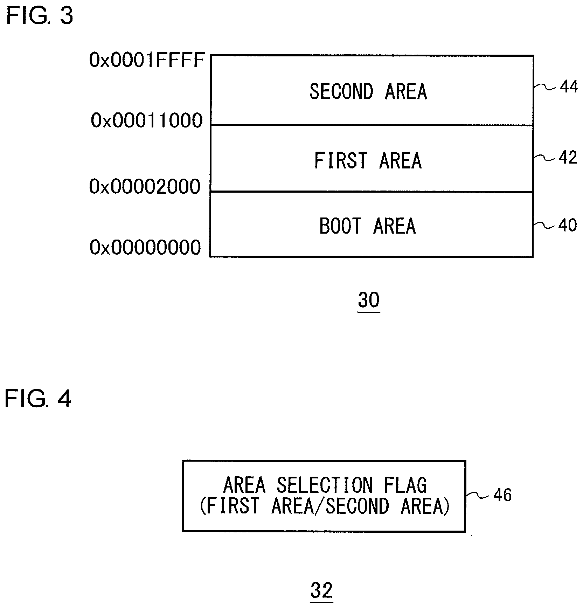

The program memory 30 is a rewritable non-volatile memory and corresponds to, for example, a built-in flash ROM. Fig. 3 shows the data structure of the program memory 30. The program memory 30 includes a boot area 40, a first area 42, and a second area 44. The boot area 40 is identified by the address "0x00000000" through the address "Ox00001FFF". The first area 42 is identified by the address "0x00002000" through the address "0x00010FFF". Further, the second area 44 is identified by the address "0x00011000" through the address "0x0001FFFF". A boot program is written in the boot area 40. The boot program is also called a boot loader and is a program that the controller 36 described later executes initially when the communication device 10 is started. A publicly known technology may be used for the boot program. The boot program operates to refer to the area selection flag stored in the data memory 32 described later.

The first area 42 and the- second area 44 are areas in which an application program can be written. It is assumed that application programs of different versions are written in the first area 42 and the second area 44. In other words, one of the application program written in the first area 42 and the application program written in the second area 44 represents the application program of a new version. When the communication system 100 is shipped, the application program is written only in, for example, the first area 42. Reference is made back to Fig. 2.

The data memory 32 is a rewritable non-volatile memory and corresponds to, for example, an EEPROM mentioned above. Fig. 4 shows the data structure of the data memory 32. The data memory 32 includes an area selection flag 46. One of the first area 42 and the second area 44 in the program memory 30 is selected and designated by the area selection flag 46. Therefore, the area selection flag 46 has one of the values "1", indicating the first area 42, and "2", indicating the second area 44. Instead of "1" and "2", "0" and "1" may be used. In this case, the area selection flag 46 is comprised of 1 bit. For the purpose of simplifying the explanation, it is assumed in the following that the former is the case. The area selection flag 46 is set to "1", indicating the first area 42, when the communication device 10 is shipped. Reference is made back to Fig. 2. The data memory 32 may not be built in the micro control unit 20 but may be externally coupled via a serial peripheral interface (SPI) or an inter integrated circuit (I2C) interface.

The communication unit 22 communicates with the base station device 12 (not shown) by executing a wireless communication scheme for short-range/small-power equipment. The communication interface 34 is an interface with the communication unit 22 in the micro control unit 20 and connects to the communication unit 22. The communication interface 34 corresponds to, for example, an SPI, etc. For example, the communication interface 34 receives an application program that should be written in the program memory 30, i.e., the application program for an update described above, from the communication unit 22.

The controller 36 controls the operation of the communication device 10. Starting and updating of an application program will be highlighted in the following description. In these steps, the controller 36 uses the RAM 38 as appropriate. A publicly known technology may be used for the RAM 38 and a description thereof is omitted. A description will first be given of starting an application program. First, the controller 36 executes the boot program written in the boot area 40 of the program memory 30 when the device is started. The boot program starts the application program written in the first area 42 or the second area 44 in the program memory 30 in accordance with the selection in the area selection flag 46 stored in the data memory 32. When the area selection flag 46 is "1", indicating the first area 42, the controller 36 accesses the address "0x00002000" in the program memory 30. The address "0x00002000" is the initial address of the first area 42, and the controller 36 starts the application program written in the first area 42.

Meanwhile, when the area selection flag 46 is "2", indicating the second area 44, the controller 36 accesses the address "0x00011000" in the program memory 30. The address "0x00011000" is the initial address of the second area 44, and the controller 36 starts the application program written in the second area 44. As mentioned above, the area selection flag 46 is set to "1" when the communication device 10 is shipped so that the controller 36 starts the application program written in the first area 42.

A description will now be given of updating. When the communication interface 34 receives the application program for an update, the controller 36 checks the area selection flag 46 stored in the data memory 32. The controller 36 writes the application program for an update in the first area 42 or the second area 44 in the program memory 30 in response to the non-selection in the area selection flag 46. For example, when the area selection flag 46 is "1", indicating the first area 42, the controller 36 writes the application program for an update in the second area 44 that is not selected. Meanwhile, when the area selection flag 46 is "2", indicating the second area 44, the controller 36 writes the application program for an update in the first area 42 that is not selected.

When the controller 36 has written the application program for an update, the controller 36 changes the area selection flag 46 stored in the data memory 32. For example, when the area selection flag 46 is "1", indicating the first area 42, the controller 36 changes the area selection flag 46 to "2", indicating the second area 44. Meanwhile, when the area selection flag 46 is "2", indicating the second area 44, the controller 36 changes the area selection flag 46 to "1", indicating the first area 42. The controller 36 re-starts the communication device 10 when the area selection flag 46 has been changed. As a result, the above-mentioned process for starting is initiated.

It should be noted here that the controller 36 maintains the area selection flag 46 stored in the data memory 32 in the event that the communication unit 22 and the communication interface 34 fail to receive the application program. In other words, the controller 36 does not change the area selection flag 46. The controller 36 maintains the area selection flag 46 stored in the data memory 32 also when the controller 36 fails to write the application program received in the communication interface 34.

The features are implemented in hardware such as a CPU, a memory, or other LSI's, of any computer and in software such as a program loaded into a memory. The figure depicts functional blocks implemented by the cooperation of these elements. Therefore, it will be understood by those skilled in the art that the functional blocks may be implemented in a variety of manners by hardware only or by a combination of hardware and software.

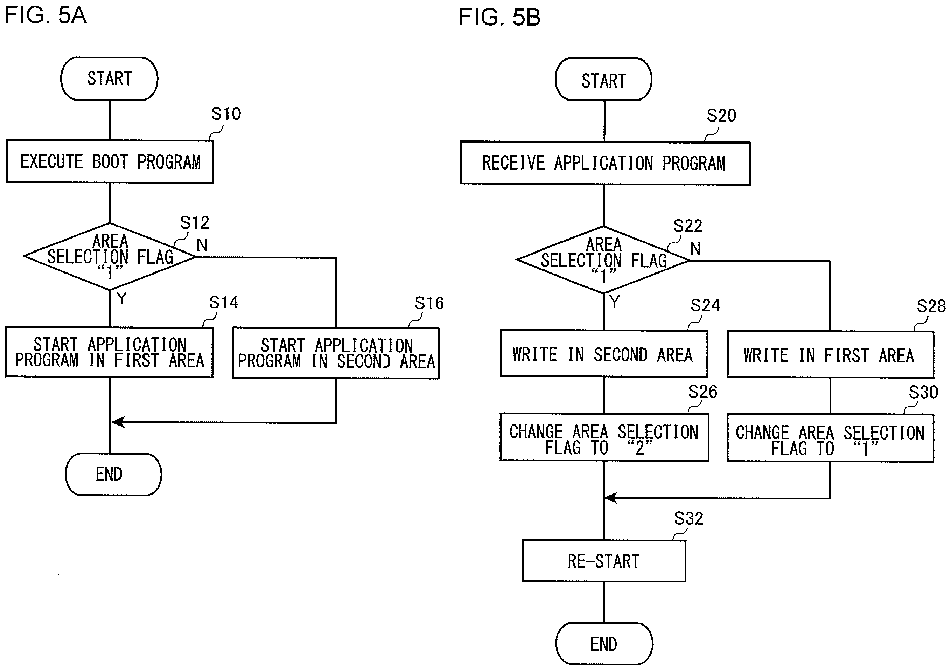

A description will now be given of the operation of the communication system 100 with the above configuration. Figs. 5A and 5B are flowcharts showing sequences of steps performed by the communication device 10. Fig. 5A shows a sequence of steps for a start process. The controller 36 executes the boot program written in the boot area 40 (S10). When the area selection flag 46 stored in the data memory 32 is "1" (Y in S12), the controller 36 starts the application program written in the first area 42 (S14). Meanwhile, when the area selection flag 46 stored in the data memory 32 is not "1" (N in S12), the controller 36 starts the application program written in the second area 44 (S16).

Fig. 5B shows a sequence of steps for an updating process. The communication interface 34 receives the application program (S20). When the area selection flag 46 stored in the data memory 32 is "1" (Y in S22), the controller 36 writes the application program in the second area 44 (S24) and changes the area selection flag 46 to "2" (S26). Meanwhile, when the area selection flag 46 stored in the data memory 32 is not "1" (N in S22), the controller 36 writes the application program in the first area 42 (S28) and changes the area selection flag 46 to "1" (S30). The controller 36 re-starts the communication device 10 (S32).

According to the embodiment, the first area and the second area are provided in the program memory and the area selection flag for selecting the area is used. Therefore, an area different from the area in which the application program being used is written can be used to write the application program for an update. Since the application program being used and the application program for an update are written in different areas, the application program for an update can be written without affecting the application program being used. Since the application program for an update is written without affecting the application program being used, the application program can be updated safely.

Since the application program is started in accordance with the selection in the area selection flag and the application program is written in accordance with the non-selection in the area selection flag, starting and writing of the application program are controlled only by using a single area selection flag. Further, since only one area selection flag need be changed, the process is simplified. Further, the area selection flag is not changed in the event of a failure to receive the application program or in the event of a failure to write the application program. Therefore, the safety is improved.

A summary of one embodiment of the present invention is as follows. A communication device 10 according to one embodiment of the present invention comprises: a program memory 30 having a boot area 40 in which a boot program is written, and a first area 42 and a second area 44 in which writing of an application program is enabled; a data memory 32 in which an area selection flag 46 selecting one of the first area 42 and the second area 44 in the program memory 30 is stored; a communication interface 34 that receives an application program that should be written in the program memory 30; and a controller 36 that executes the boot program written in the boot area 40 in the program memory 30 and starts the application program written in the first area 42 or the second area 44 in the program memory 30 in accordance with selection in the area selection flag 46 stored in the data memory 32. The controller 36 writes the application program received in the communication interface 34 in the first area 42 or the second area 44 in the program memory 30 in accordance with non-selection in the area selection flag 46 stored in the data memory 32, changes the area selection flag 46 stored in the data memory 32, and re-starts the communication device 10.

When the area selection flag 46 stored in the data memory 32 selects the first area 42, the controller 36 starts the application program written in the first area 42 in the program memory 30. When the area selection flag 46 stored in the data memory 32 selects the first area 42, the controller 36 may write, in the second area 44 in the program memory 30, the application program received in the communication interface 34 and change the area selection flag 46 stored in the data memory 32 to select the second area 44.

The controller 36 may maintain the area selection flag 46 stored in the data memory 32 in the event that the communication interface 34 fails to receive the application program or in the event that the controller 36 fails to write the application program received in the communication interface 34.

A test program for the communication device 10 may be written in the first area 42 or the second area 44 in the program memory 30.

Another embodiment of the present invention relates to a control method. The method is adapted to a communication device 10 comprising: a program memory 30 having a boot area 40 in which a boot program is written, and a first area 42 and a second area 44 in which writing of an application program is enabled; a data memory 32 in which an area selection flag 46 selecting one of the first area 42 and the second area 44 in the program memory 30 is stored; and a communication interface 34 that receives an application program that should be written in the program memory 30, the method comprising: executing the boot program written in the boot area 40 in the program memory 30 and starting the application program written in the first area 42 or the second area 44 in the program memory 30 in accordance with selection in the area selection flag 46 stored in the data memory 32; and writing the application program received in the communication interface 34 in the first area 42 or the second area 44 in the program memory 30 in accordance with non-selection in the area selection flag 46 stored in the data memory 32, changing the area selection flag 46 stored in the data memory 32, and re-starting the communication device 10.

### (Embodiment 2)

A description will now be given of embodiment 2. Like embodiment 1, embodiment 2 relates to a communication device adapted for short-range/small-power equipment and is directed to updating an application program easily and safely. In embodiment 2, an application program with a larger size than that of embodiment 1 is assumed. In that case, it will be difficult to provide two areas in the non-volatile memory of the MCU in which the application program can be written, unlike the case of embodiment 1. For this reason, an external memory is connected to the MCU and the application program for an update is written in the external memory in embodiment 2. Further, the communication device stores an update flag in the EEPROM of the MCU. The update flag indicates whether the application program for an update resides in the external memory.

The CPU of the MCU in the communication device refers to the update flag when the communication device is started. When the application program for an update does not reside in the external memory, the CPU starts the application program written in the non-volatile memory of the MCU. Meanwhile, when the application program for an update resides in the external memory, the CPU copies the application program for an update from the external memory to the non-volatile memory of the MCU. When the application program for an update has been copied, the CPU changes the update flag and then re-starts the communication device. The communication system 100 according to embodiment 2 is of the same type as that of Fig. 1. The difference will be highlighted in the description below.

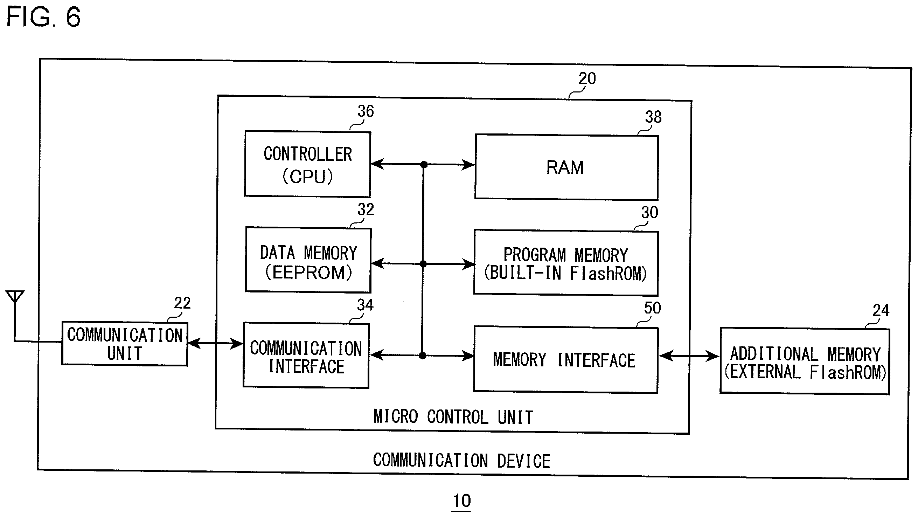

Fig. 6 shows the configuration of the communication device 10 according to embodiment 2. The communication device 10 includes a micro control unit 20, a communication unit 22, and an additional memory 24. Further, the micro control unit 20 includes a program memory 30, a data memory 32, a communication interface 34, a controller 36, a RAM 38, and a memory interface 50.

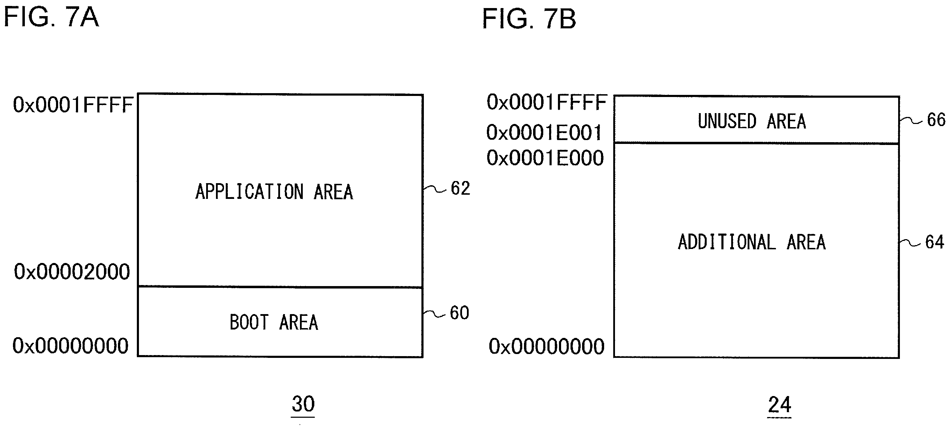

The data structure of the program memory 30 is different from the one described already. Figs. 7A-7B show the data structures of the program memory 30 and the additional memory 24. In particular, Fig. 7A shows the data structure of the program memory 30. The program memory 30 includes a boot area 60 and an application area 62. The boot area 60 is identified by the address "0x00000000" through the address "0x00001FFF". Further, the application area 62 is identified by the address "0x00002000" through the address "0x0001FFFF". The boot area 60 is similar to the boot area 40 described already so that a description thereof is omitted. The boot program operates to check the update flag stored in the data memory 32 described below.

The application area 62 is an area in which the application program can be written. The application area 62 has the same function as the first area 42 and the second area 44 described already but has a larger size. In other words, the application program having a larger size can be written in the application area 62 than in the first area 42 or the second area 44. Reference is made back to Fig. 6.

The additional memory 24 is an external FlashROM and corresponds to the external memory mentioned above. The memory interface 50 is an interface in the micro control unit 20 for interfacing with the additional memory 24 and is connected to the additional memory 24. The memory interface 50 corresponds to, for example, an SPI. Fig. 7B shows a data structure of the additional memory 24. The additional memory 24 includes an additional area 64 and an unused area 66. The additional area 64 is identified by the address "0x00000000" through the address "0x0001E000". Further, the unused area 66 is identified by the address "0x0001E001" through the address "0x0001FFFF". In other words, the additional area 64 and the application area 62 are of the same size. The unused area 66 and the boot area 60 are of the same size. The additional memory 24 and the program memory 30 are also of the same size. The additional area 64 is an area in which the application program for an update can be written. The application program for an update is used to update the application program written in the application area 62 in the program memory 30. Reference is made back to Fig. 6.

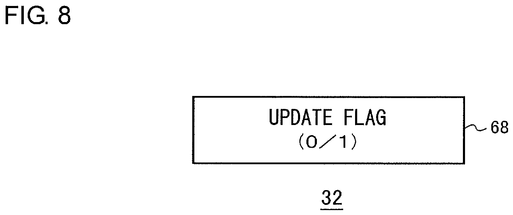

The data structure of the data memory 32 is different from the one described already. Fig. 8 shows a data structure of the data memory 32. The data memory 32 includes an update flag 68. The update flag 68 indicates the presence or absence of an updatable application program in the additional memory 24. The update flag 68 has a value "1" when the updatable application program resides in the additional memory 24 and has a value "0" when the updatable application program does not reside in the additional memory 24. Therefore, the update flag 68 is comprised of 1 bit. The update flag 68 is set to "0", indicating the updatable application program does not reside in the additional memory 24, when the communication device 10 is shipped. Reference is made back to Fig. 6. The communication unit 22 and the communication interface 34 are as described already and a description thereof is omitted.

A description will be given of the controller 36, also highlighting starting and updating of an application program. A description will first be given of starting. The controller 36 executes the boot program written in the boot area 60 in the program memory 30 when the communication device 10 is started. When the update flag 68 stored in the data memory 32 is "0", indicating the absence, the boot program accesses the address "0x00002000" in the program memory 30. The address "0x00002000" is the initial address of the application area 62 so that the controller 36 starts the application program written in the application area 62. The process performed when the update flag 68 stored in the data memory 32 is "1", indicating the presence, will be described later. As described above, the update flag 68 is set to "0" when the communication device 10 is shipped. Therefore, the controller 36 starts the application program written in the application area 62.

A description will now be given of updating. When the communication interface 34 receives the application program for an update, the controller 36 writes the application program for an update in the additional area 64 in the additional memory 24. Further, the controller 36 updates the update flag 68 stored in the data memory 32 when the application program for an update has been written. To describe it more specifically, the controller 36 changes the update flag 68 to "1", indicating that the updatable application program resides in the additional memory 24. Further, when the controller 36 has changed the update flag 68, the controller 36 re-starts the communication device 10.

This is followed by the aforementioned process to start the communication device. The boot program checks the update flag 68 stored in the data memory 32. When the update flag 68 is "1", indicating the presence, the controller 36 copies the application program written in the additional area 64 in the additional memory 24 to the application area 62 in the program memory 30. When the application program has been copied, the controller 36 changes the update flag 68 stored in the data memory 32 to "0", indicating the absence. Further, when the update flag 68 has been updated, the controller 36 re-starts the communication device 10. As a result, the aforementioned process to start the communication device 10 is initiated.

When the communication unit 22 and the communication interface 34 fail to receive the application program, the controller 36 maintains the update flag 68 stored in the data memory 32. In other words, the controller 36 does not change the update flag 68. The controller 36 also maintains the update flag 68 stored in the data memory 32 when the controller 36 fails to write the application program received in the communication interface 34.

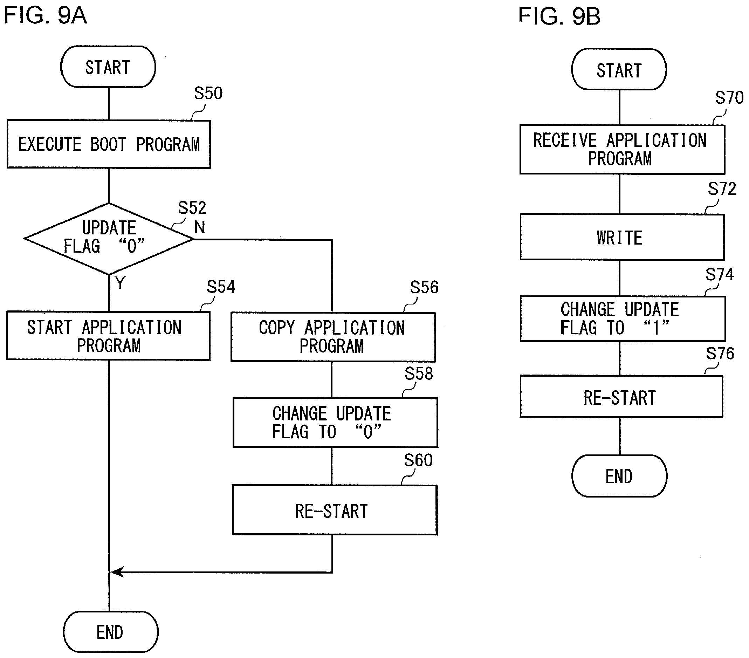

A description will be given of the operation of the communication system 100 with the above configuration. Figs. 9A and 9B are flowcharts showing sequences of steps performed by the communication device 10. Fig. 9A shows a sequence of steps for a start process. The controller 36 executes the boot program written in the boot area 60 (S50). When the update flag 68 written in the data memory 32 is "0" (Y in S52), the controller 36 starts the application program written in the application area 62 (S54). Meanwhile, when the update flag 68 stored in the data memory 32 is not "0" (N in S52), the controller 36 copies the application program from the additional memory 24 to the application area 62 (S56). The controller 36 changes the update flag 68 stored in the data memory 32 to "0" (S58) The controller 36 re-starts the communication device 10 (S60).

Fig. 9B shows a sequence of steps for an updating process. The communication interface 34 receives the application program (S70). The controller 36 writes the application program in the additional memory 24 (S72) and changes the update flag 68 stored in the data memory 32 to "1" (S74). The controller 36 re-starts the communication device 10 (S76).

According to this embodiment, an additional memory separate from the program memory provided with an application area is used. Therefore, the application program being used and the application program for an update can be written in separate memories. Since the application program being used and the application program for an update are written in separate memories, the device can be compatible with application programs of large sizes. Since the application program being used and the application program for an update are written in separate memories, the application program for an update can be written without affecting the application program being used. Since the application program for an update is written without affecting the application program being used, the application program can be updated safely.

Since the application program is started in accordance with the selection in the update flag and the application program is written in accordance with the non-selection in the update flag, starting and copying of the application program are controlled only by using a single update flag. Further, since only one update flag need be changed, the process is simplified. Further, the update flag is not changed in the event of a failure to receive the application program or in the event of a failure to write the application program. Therefore, the safety is improved.

A summary of one embodiment of the present invention is as follows. Another embodiment of the present invention also relates to the communication device 10. The device comprises: a program memory 30 having a boot area 60 in which a boot program is written and an application area 62 in which writing of an application program is enabled; an additional memory 24 in which writing of an application program for updating the application program written in the application area 62 in the program memory 30 is enabled; a data memory 32 in which an update flag 68 indicating presence or absence of an updatable application program in the additional memory 24 is stored; a communication interface 34 that receives an application program that should be written in the additional memory 24; and a controller 36 that executes the boot program written in the boot area 60 in the program memory 30 and starts the application program written in the application area 62 in the program memory 30 when the update flag 68 stored in the data memory 32 indicates the absence. The controller 36 writes the application program received in the communication interface 34 in the additional memory 24, changes the update flag 68 stored in the data memory 32 to indicate the presence, and re-starts the communication device, and the controller 36 executes the boot program written in the boot area 60 in the program memory 30 and, when the update flag 68 stored in the data memory 32 indicates the presence, copies the application program written in the additional memory 24 to the application area 62 in the program memory 30, changes the update flag 68 stored in the data memory 32 to indicate the absence, and re-starts the communication device.

The controller 36 may maintain the update flag 68 stored in the data memory 32 in the event that the communication interface 34 fails to receive the application program or in the event that the controller 36 fails to write the application program received in the communication interface 34.

A test program for the communication device 10 may be written in the application area 62 in the program memory 30.

Another embodiment of the present invention also relates to a control method. The method adapted to a communication device 10 comprising: a program memory 30 having a boot area 60 in which a boot program is written and an application area 62 in which writing of an application program is enabled; an additional memory 24 in which writing of an application program for updating the application program written in the application area 62 in the program memory 30 is enabled; a data memory 32 in which an update flag 68 indicating presence or absence of an updatable application program in the additional memory 24 is stored; and a communication interface 34 that receives an application program that should be written in the additional memory 24, the method comprising: executing the boot program written in the boot area 60 in the program memory 30 and starting the application program written in the application area 62 in the program memory 30 when the update flag 68 stored in the data memory 32 indicates the absence; writing the application program received in the communication interface 34 in the additional memory 24, changing the update flag 68 stored in the data memory 32 to indicate the presence, and re-starting the communication device 10; and executing the boot program written in the boot area 60 in the program memory 30 and, when the update flag 68 stored in the data memory 32 indicates the presence, copying the application program written in the additional memory 24 to the application area 62 in the program memory 30, changing the update flag 68 stored in the data memory 32 to indicate the absence, and re-starting the communication device 10.

### (Embodiment 3)

A description will now be given of embodiment 3. Embodiment 3 relates to a communication device in which embodiment 1 is combined with embodiment 2. Therefore, the external memory is provided with a first area and a second area in which an application program can be written. Further, an area selection flag is used to distinguish between the first area and the second area. The communication system 100 and the communication device 10 according to embodiment 3 are of the same type as those of Figs. 1 and 6. The difference will be highlighted in the description below.

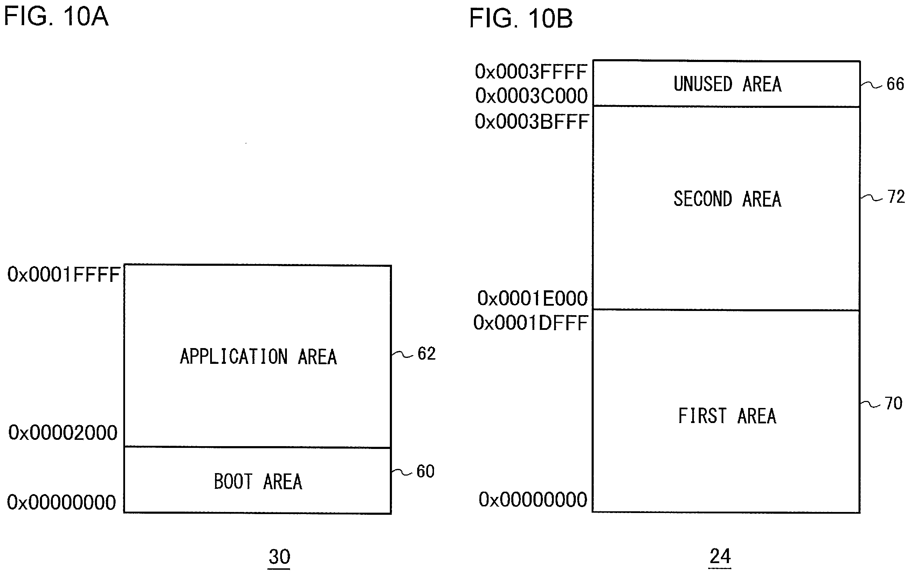

The data structure of the additional memory 24 of Fig. 6 is different from the one described already. Figs. 10A-10B show data structures of the program memory 30 and the additional memory 24 according to embodiment 3. Fig. 10A shows a data structure of the program memory 30 similar to that of Fig. 7A so that a description thereof is omitted. Fig. 10B shows a data structure of the additional memory 24. The additional memory 24 includes a first area 70, a second area 72, and an unused area 66. The first area 70 is identified by the address "0x00000000" through the address "0x0001DFFF". Further, the second area 72 is identified by the address "0x0001E000" through the address "0x0003BFFF". Further, the unused area 66 is identified by the address "0x0003C000" through the address "0x0001FFFF". The first area 70 and the second area 72 are areas in which the application program for an update can be written. As described above, the application program for an update is used to update the application program written in the application area 62 in the program memory 30. Reference is made back to Fig. 6.

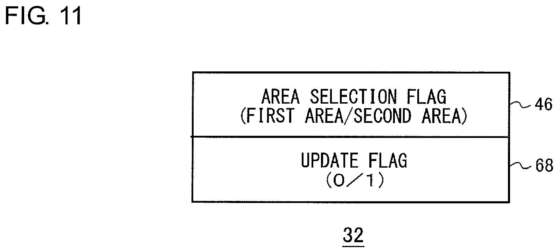

The data structure of the data memory 32 is different from the one described already. Fig. 11 shows a data structure of the data memory 32 according to embodiment 3. The data memory 32 includes the area selection flag 46 in addition to the update flag 68. The area selection flag 46 selects one of the first area 70 and the second area 72 in the additional memory 24. For this reason, the area selection flag 46 has a value "1", indicating the first area 70, or a value "2", indicating the second area 72. The area selection flag 46 may be as described in embodiment 1. When the communication device 10 is shipped, the update flag 68 is set to "0", indicating the updatable application program does not reside in the additional memory 24, and the area selection flag 46 is set to "2", indicating the second area 72. Reference is made back to Fig. 6.

A description will be given of the controller 36, also highlighting starting and updating of an application program. A description will first be given of starting. The controller 36 first executes the boot program written in the boot area 60 in the program memory 30 when the communication device 10 is started. When the update flag 68 stored in the data memory 32 is "0", indicating the absence, the boot program accesses the address "0x00002000" in the program memory 30. In this process, the boot program does not check the area selection flag 46 stored in the data memory 32. The address "0x00002000" is the initial address of the application area 62 so that the controller 36 starts the application program written in the application area 62. The process performed when the update flag 68 stored in the data memory 32 is "1", indicating the presence, will be described later. As described above, the update flag 68 is set to "0" when the communication device 10 is shipped. Therefore, the controller 36 starts the application program written in the application area 62.

A description will now be given of updating. When the communication interface 34 receives the application program for an update, the controller 36 checks the area selection flag 46 stored in the data memory 32. The controller 36 writes the application program for an update in the first area 70 or the second area 72 in the additional memory 24 in accordance with the non-selection in the area selection flag 46. Further, the controller 36 updates the area selection flag 46 stored in the data memory 32 when the application program for an update has been written. For example, when the area selection flag 46 is "1", indicating the first area 70, the controller 36 writes the application program for an update in the second area 72 that is not selected, and changes the area selection flag 46 to "2". Conversely, when the area selection flag 46 is "2", indicating the second area 72, the controller 36 writes the application program for an update in the first area 70 that is not selected, and changes the area selection flag 46 to "1". Following this, the controller 36 changes the update flag 68 stored in the data memory 32. To describe it more specifically, the controller 36 changes the update flag 68 to "1", indicating that the updatable application program resides in the additional memory 24. Further, when the controller 36 has changed the update flag 68, the controller 36 re-starts the communication device 10.

This is followed by the aforementioned process to start the communication device 10. The boot program checks the update flag 68 and the area selection flag 46 stored in the data memory 32. When the update flag 68 is "1", indicating the presence, the controller 36 copies the application program written in the first area 70 or the second area 72 in the additional memory 24 to the application area 62 in the program memory 30 in accordance with the selection in the area selection flag 46. To describe it more specifically, the controller 36 copies the application program for an update written in the first area 70 to the application area 62 when the area selection flag 46 is "1", indicating the first area 70. Conversely, when the area selection flag 46 is "1", indicating the second area 72, the controller 36 copies the application program for an update written in the second area 72 to the application area 62. When the application program for an update has been copied, the controller 36 changes the update flag 68 stored in the data memory 32 to "0", indicating the absence. Further, when the update flag 68 has been updated, the controller 36 re-starts the communication device 10. As a result, the aforementioned process to start the communication device 10 is initiated.

When the communication unit 22 and the communication interface 34 fail to receive the application program, the controller 36 maintains the update flag 68 and the area selection flag 46 stored in the data memory 32. In other words, the controller 36 does not change the update flag 68 or the area selection flag 46. The controller 36 also maintains the update flag 68 and the area selection flag 46 stored in the data memory 32 when the controller 36 fails to write the application program received in the communication interface 34.

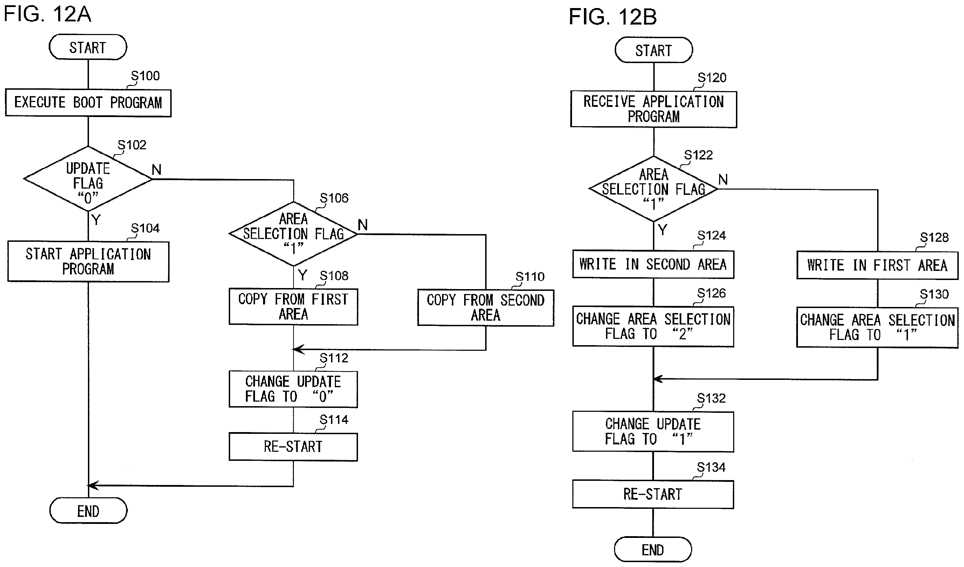

A description will be given of the operation of the communication system 100 with the above configuration. Figs. 12A and 12B are flowcharts showing sequences of steps performed by the communication device 10 according to embodiment 3 of the present invention. Fig. 12A shows a sequence of steps for a start process. The controller 36 executes the boot program written in the boot area 60 (S100). When the update flag 68 written in the data memory 32 is "0" (Y in S102), the controller 36 starts the application program written in the application area 62 (S104).

Meanwhile, when the update flag 68 stored in the data memory 32 is not "0" (N in S102), and when the area selection flag 46 stored in the data memory 32 is "1" (Y in S106), the controller 36 copies the application program from the first area 70 to the application area 62 (S108). Meanwhile, when the area selection flag 46 stored in the data memory 32 is not "1" (N in S106), the controller 36 copies the application program from the second area 72 to the application area 62 (S110). The controller 36 changes the update flag 68 stored in the data memory 32 to "0" (S112). The controller 36 re-starts the communication device 10 (S114).

Fig. 12B shows a sequence of steps for an updating process. The communication interface 34 receives the application program (S120). When the area selection flag 46 stored in the data memory 32 is "1" (Y in S122), the controller 36 writes the application program in the second area 72 (S124) and changes the area selection flag 46 to "2" (S126). Meanwhile, when the area selection flag 46 stored in the data memory 32 is not "1" (N in S122), the controller 36 writes the application program in the first area 70 (S128) and changes the area selection flag 46 to "1" (S130). The controller 36 changes the update flag 68 stored in the data memory 32 to "1" (S132). The controller 36 re-starts the communication device 10 (S134).

According to this embodiment, two areas are provided in the additional memory. Therefore, application programs of different versions for updates can be written. Since application programs of different versions for updates can be written, the previous application program for an update can be restored even if a failure occurs in the latest application program for an update. Since the previous application program for an update is restored, the impact on the operation of the communication device is reduced. Since the application program for an update is restored, the application program can be updated safely.

Since the application program is started in accordance with the selection in the update flag and the application program is copied in accordance with the non-selection in the update flag and the area control flag, starting and copying of the application program are controlled only by using the update flag and the area control flag. Further, since only the update flag and the area control flag need be changed, the process is simplified. Further, the update flag and the area control flag are not changed in the event of a failure to receive the application program or in the event of a failure to write the application program. Therefore, the safety is improved.

A summary of one embodiment of the present invention is as follows. The additional memory 24 may include a first area 70 and a second area 72 in which writing of an application program is enabled. The data memory 32 may also store an area selection flag 46 selecting one of the first area 70 and the second area 72 in the additional memory 24, the controller 36 may write the application program received in the communication interface 34 in the first area 70 or the second area 72 in the additional memory 24 in accordance with the non-selection in the area selection flag 46 stored in the data memory 32, change the area selection flag 46 stored in the data memory 32, and re-start the communication device, and the controller 36 may copy the application program written in the first area 70 or the second area 72 in the additional memory 24 to the application area 62 in the program memory 30 in accordance with the selection in the area selection flag 46 stored in the data memory 32.

The controller 36 may maintain the update flag 68 and the area selection flag 46 stored in the data memory 32 in the event that the communication interface 34 fails to receive the application program or in the event that the controller 36 fails to write the application program received in the communication interface 34.

Described above is an explanation based on an exemplary embodiment. The embodiment is intended to be illustrative only and it will be understood by those skilled in the art that various modifications to constituting elements and processes could be developed and that such modifications are also within the scope of the present invention.

In embodiment 1, the program memory 30 may be used as follows. For example, a test program for the communication device 10 that should be used at the time of manufacturing may be written in the first area 42 in the program memory 30, and the application program may be written in the second area 44. In this case, the area selection flag 46 selects the first area 42 at the time of manufacturing and selects the second area 44 at the time of shipping. The application program may be written in the first area 42 and the test program may be written in the second area 44. According to this variation, the test program written in the first area 42 is deleted in the future so that the consumption of the memory by the test program that is used only when the device manufactured is tested is inhibited.

In embodiments 2 and 3, the program memory 30 and the additional memory 24 may be used as follows. For example, the test program for the communication device 10 may be written in the application area 62 in the program memory 30 and the application program may be written in the additional memory 24. In this case, the update flag 68 causes the test program to be started at the time of manufacturing and causes the application program to be copied at the time of shipping. According to this variation, the test program written in the application area 62 is deleted at the time of shipping so that the consumption of the memory by the test program that is used only when the device manufactured is tested is inhibited.

In embodiments 1 through 3, the micro control unit 20 includes the communication interface 34, and the communication interface 34 is connected to the communication unit 22. Alternatively, the micro control unit 20 may include the communication unit 22 instead of the communication interface 34. The communication interface 34 included in the micro control unit 20 may be used as a receiver. According to this variation, the flexibility of the configuration is improved.

### [DESCRIPTION OF THE REFERENCE NUMERALS]

10 communication device, 12 base station device, 14 network, 16 server device, 20 micro control unit, 22 communication unit, 30 program memory, 32 data memory, 34 communication interface (receiver), 36 controller, 38 RAM, 100 communication system

### [INDUSTRIAL APPLICABILITY]

According to the present invention, programs can be updated safely.

## Claims

1. A communication device comprising:
a program memory having a boot area in which a boot program is written, and a first area and a second area in which writing of an application program is enabled;
a data memory in which an area selection flag selecting one of the first area and the second area in the program memory is stored;
a receiver that receives an application program that should be written in the program memory; and
a controller that executes the boot program written in the boot area in the program memory and starts the application program written in the first area or the second area in the program memory in accordance with selection in the area selection flag stored in the data memory, wherein
the controller writes the application program received in the receiver in the first area or the second area in the program memory in accordance with non-selection in the area selection flag stored in the data memory, changes the area selection flag stored in the data memory, and re-starts the communication device.

2. The communication device according to claim 1,
wherein
when the area selection flag stored in the data memory selects the first area, the controller starts the application program written in the first area in the program memory, and
when the area selection flag stored in the data memory selects the first area, the controller writes, in the second area in the program memory, the application program received in the receiver and changes the area selection flag stored in the data memory to select the second area.

3. The communication device according to claim 1 or claim 2, wherein
the controller maintains the area selection flag stored in the data memory in the event that the receiver fails to receive the application program or in the event that the controller fails to write the application program received in the receiver.

4. A communication device comprising:
a program memory having a boot area in which a boot program is written and an application area in which writing of an application program is enabled;
an additional memory in which writing of an application program for updating the application program written in the application area in the program memory is enabled;
a data memory in which an update flag indicating presence or absence of an updatable application program in the additional memory is stored;
a receiver that receives an application program that should be written in the additional memory; and
a controller that executes the boot program written in the boot area in the program memory and starts the application program written in the application area in the program memory when the update flag stored in the data memory indicates the absence, wherein
the controller writes the application program received in the receiver in the additional memory, changes the update flag stored in the data memory to indicate the presence, and re-starts the communication device, and
the controller executes the boot program written in the boot area in the program memory and, when the update flag stored in the data memory indicates the presence, copies the application program written in the additional memory to the application area in the program memory, changes the update flag stored in the data memory to indicate the absence, and re-starts the communication device.

5. The communication device according to claim 4,
wherein
the controller maintains the update flag stored in the data memory in the event that the receiver fails to receive the application program or in the event that the controller fails to write the application program received in the receiver.

6. The communication device according to claim 4,
wherein
the additional memory includes a first area and a second area in which writing of an application program is enabled, the data memory stores an area selection flag selecting one of the first area and the second area in the additional memory, the controller writes the application program received in the receiver in the first area or the second area in the additional memory in accordance with the non-selection in the area selection flag stored in the data memory, changes the area selection flag stored in the data memory, and re-starts the communication device, and the controller copies the application program written in the first area or the second area in the additional memory to the application area in the program memory in accordance with the selection in the area selection flag stored in the data memory.

7. The communication device according to claim 6,
wherein
the controller maintains the update flag and the area selection flag stored in the data memory in the event that the receiver fails to receive the application program or in the event that the controller fails to write the application program received in the receiver.

8. The communication device according to any one of claims 1 through 3, wherein
a test program for the communication device is written in the first area or the second area in the program memory.

9. The communication device according to any one of claims 4 through 7, wherein
a test program for the communication device is written in the application area in the program memory.

10. A control method adapted to a communication device comprising:
a program memory having a boot area in which a boot program is written, and a first area and a second area in which writing of an application program is enabled;
a data memory in which an area selection flag selecting one of the first area and the second area in the program memory is stored; and
a receiver that receives an application program that should be written in the program memory, the method comprising:
executing the boot program written in the boot area in the program memory and starting the application program written in the first area or the second area in the program memory in accordance with selection in the area selection flag stored in the data memory; and
writing the application program received in the receiver in the first area or the second area in the program memory in accordance with non-selection in the area selection flag stored in the data memory, changing the area selection flag stored in the data memory, and re-starting the communication device.

11. A control method adapted to a communication device comprising:
a program memory having a boot area in which a boot program is written and an application area in which writing of an application program is enabled;
an additional memory in which writing of an application program for updating the application program written in the application area in the program memory is enabled;
a data memory in which an update flag indicating presence or absence of an updatable application program in the additional memory is stored; and
a receiver that receives an application program that should be written in the additional memory, the method comprising:
executing the boot program written in the boot area in the program memory and starting the application program written in the application area in the program memory when the update flag stored in the data memory indicates the absence;
writing the application program received in the receiver in the additional memory, changing the update flag stored in the data memory to indicate the presence, and re-starting the communication device; and
executing the boot program written in the boot area in the program memory and, when the update flag stored in the data memory indicates the presence, copying the application program written in the additional memory to the application area in the program memory, changing the update flag stored in the data memory to indicate the absence, and re-starting the communication device.
